# EUROPÄISCHE PATENTSCHRIFT

(11) **EP 2 039 459 B1**
(45) Veröffentlichungstag und Bekanntmachung des Hinweises auf die Patenterteilung: **16.11.2011**
(21) Anmeldenummer: 08164317.3
(22) Anmeldetag: 15.09.2008
(51) Int. Cl.: B23K 13/01, F01D 5/30

(54) **Verfahren zum Verbinden von metallischen Bauelementen und Vorrichtung zur Durchführung eines induktiven Nieder- oder Hochfrequenzpressschweißverfahrens**
Method for joining metallic compounds and device for executing an inductive low or high frequency welding procedure
Procédé de raccordement de composants métalliques et dispositif d'exécution d'un procédé de soudure par pression-induction à basse ou haute fréquence

(30) Priorität: 18.09.2007 DE 102007044516
(43) Veröffentlichungstag der Anmeldung: 25.03.2009
(73) Patentinhaber: MTU Aero Engines GmbH, 80995 München (DE)
(72) Erfinder: Hanrieder, Herbert, 85411 Hohenkammer (DE); Gindorf, Alexander, 85247 Schwabhausen (DE); Zenzinger, Günter, 85238 Petershausen (DE); Bamberg, Joachim, 85221 Dachau (DE)

(56) Entgegenhaltungen:
- EP-A- 1 112 141
- DE-A1- 4 404 931
- DE-A1- 19 858 702

## Beschreibung

Die vorliegende Erfindung betrifft ein Verfahren zum Verbinden von metallischen Bauelementen, insbesondere von Bauelementen einer Gasturbine, wobei das Verbinden entsprechender Verbindungsflächen der Bauelemente mittels eines induktiven Nieder- oder Hochfrequenzpressschweißens erfolgt. Die Erfindung betrifft weiterhin eine Vorrichtung zur Durchführung eines induktiven Nieder- oder Hochfrequenzpressschweißverfahrens zum Verbinden von metallischen Bauelementen, insbesondere von Bauelementen einer Gasturbine, mit mindestens einem Induktionsgenerator und mindestens einem Induktor.

Aus dem Stand der Technik sind verschiedene Verfahren zum Verbinden von metallischen Bauelementen mittels induktivem Hochfrequenzpressschweißens bekannt. So beschreibt zum Beispiel die DE 198 58 702 A1 ein Verfahren zum Verbinden von Schaufelteilen einer Gasturbine, wobei ein Schaufelblattabschnitt und wenigstens ein weiteres Schaufelteil bereitgestellt werden. Dabei werden entsprechende Verbindungsflächen dieser Elemente im Wesentlichen fluchtend beabstandet zueinander positioniert und anschließend durch Erregen eines Induktors mit hochfrequentem Strom und durch Zusammenfahren unter Berührung ihrer erwärmten Verbindungsflächen miteinander verschweißt. Dabei wird der Induktor mit einer konstanten Frequenz, die im Allgemeinen über 0,75 MHz liegt, erregt. Die Frequenz wird zudem in Abhängigkeit von der Geometrie der Verbindungsflächen gewählt. Weitere induktive Hochfrequenzpressschweißverfahren sind aus der EP 1 112 141 B1 und der EP 1 140 417 B1 bekannt. Neben einer möglichst gleichmäßigen Erwärmung der beiden Schweißpartner ist für die Qualität der Fügestelle zudem von entscheidender Bedeutung, dass die Füge- bzw. Verbindungsflächen der Bauelemente möglichst frei von Ablagerungen und insbesondere Oxiden sind. Üblicherweise werden die Verbindungsflächen der Bauelemente vor dem Schweißen gereinigt, wobei allerdings nicht alle Oxide entfernt werden. Verbleiben diese an der Oberfläche, können speziell bei Titanlegierungen daraus später Schweißfehler resultieren. Diese Schweißfehler entstehen insbesondere durch den Einschluss der Oxide in die Schweißnaht. Zudem muss bei dem bekannten Nieder- oder Hochfrequenzpressschweißverfahren - wie auch anderen Schweißverfahren - relativ viel Material aus der Fügezone der Bauelemente ausgetrieben werden, um das Fügen oxidierter Bauelementoberflächen zu verhindern.

Es ist daher Aufgabe der vorliegenden Erfindung ein gattungsgemäßes Verfahren zum Verbinden von metallischen Bauelementen, insbesondere von Bauelementen einer Gasturbine bereitzustellen, bei dem eine sichere, dauerhafte und qualitativ sehr hochwertige Verbindung der Bauelemente gewährleistet ist.

Es ist weiterhin Aufgabe der vorliegenden Erfindung eine gattungsgemäße Vorrichtung zur Durchführung eines induktiven Nieder- oder Hochfrequenzpressschweißverfahrens zum Verbinden von metallischen Bauelementen, insbesondere von Bauelementen einer Gasturbine bereitzustellen, welche eine sichere, dauerhafte und qualitativ sehr hochwertige Verbindung der Bauelemente gewährleistet.

Es ist weiterhin Aufgabe der vorliegenden Erfindung ein Bauteil der eingangs genannten Art bereitzustellen, bei dem eine sichere, dauerhafte und qualitativ sehr hochwertige Verbindung der einzelnen Bauelemente untereinander gewährleistet ist.

Gelöst werden diese Aufgaben durch ein Verfahren gemäß den Merkmalen des Anspruchs 1 sowie durch eine Vorrichtung gemäß den Merkmalen des Anspruchs 10.

Vorteilhafte Ausgestaltungen der Erfindung sind in den jeweiligen Unteransprüchen beschrieben.

Ein erfindungsgemäßes Verfahren zum Verbinden von metallischen Bauelementen, insbesondere von Bauelementen einer Gasturbine umfasst das Verbinden entsprechender Verbindungsflächen der Bauelemente mittels eines induktiven Nieder- oder Hochfrequenzpxessschweißverfahrens, wobei vor der Erwärmung und dem Fügen der Bauelemente mittels des induktiven Nieder- oder Hochfrequenzpressschweißens ein Sputterätzen der Verbindungsflächen durchgeführt wird. Durch das Sputterätzen können zuverlässig unerwünschte Ablagerungen und Oxide auf den zu fügenden metallenen Verbindungsflächen der Bauelemente beseitigt werden. Es können hoch reine metallische Oberflächen erzeugt werden, die ohne weitere Bearbeitungsschritte unmittelbar miteinander verschweißt werden könnten. Die Reinigung der Verbindungsflächen mithilfe des Sputterätzens steigert die Qualität der Schweißung signifikant, da Fehler, die zum Beispiel durch den Einschluss von Oxiden in der entstehenden Schweißnaht entstehen können, zuverlässig verhindert werden. Aufgrund der oxidfreien Verbindungsflächen muss zudem vorteilhafterweise nicht mehr übermäßiges Material aus der Fügezone ausgetrieben werden, d. h. der Stauweg kann stark reduziert werden, so dass auch Bauelemente mit großem Querschnitt gefügt werden können. Dabei ist insbesondere die Reinigung durch Sputterätzen vorteilhaft, da hiermit großflächige Substrate bearbeitbar sind. Da es sich bei dem Sputterätzen um einen rein physikalischen Prozess handelt, werden die Verbindungsflächen der zu fügenden Bauelemente während der Reinigung mittels des Sputterätzens chemisch nicht verändert oder beeinflusst.

In einer vorteilhaften Ausgestaltung des erfindungsgemäßen Verfahrens umfasst dieses zur Durchführung des Sputterätzens folgende Schritte: a) Verbinden der zu fügenden Bauelemente als Elektroden mit einem Induktionsgenerator und Beaufschlagung der Bauelemente mit Spannung; b) Einleiten mindestens eines Inertgases zumindest in den Bereich zwischen den zu fügenden Verbindungsflächen der Bauelemente; c) Zünden des Inertgases zur Ausbildung eines Plasmas mittels des angelegten Nieder- oder Hochfrequenzfeldes; und d) Anlegen eines Gleichspannungsfeldes mit alternierenden Polaritäten zumindest in dem Bereich zwischen den zu fügenden Verbindungsflächen der Bauelemente. Da die zu verschweißenden bzw. zu verbindenden metallischen Bauelemente als Elektroden mit dem Induktionsgenerator verbunden werden, kann das Zünden des Inertgases vorteilhafterweise durch das vom Induktionsgenerator generierte Nieder- oder Hochfrequenzfeld erfolgen. Das zusätzlich angelegte Gleichspannungsfeld mit alternierender Polarität und die damit verbundene Lenkung der Inertgasatome gewährleistet, dass die beiden Bauelemente bzw. deren Verbindungsflächen bis auf eine atomare Ebene metallisch geätzt und damit gereinigt werden. Nach der Durchführung des Sputterätzens kann dann eine Trennung der Bauelemente von dem Induktionsgenerator und eine Verbindung des Induktionsgenerators mit einer Induktionsspule mit mindestens einer Induktionsspule erfolgen, so dass unmittelbar nach dem Sputterätzen der Fügevorgang mit den als Elektroden beim Sputterätzen geschalteten Bauelementen erfolgen kann. Durch die Integration des Sputterätzens in den Prozess des induktiven Nieder- oder Hochfrequenzpressschweißens ergeben sich relativ einfach zu realisierende kostengünstige Verfahrensabläufe bei einem qualitativ hochwertigen Verbinden von metallischen Bauelementen. In weiteren Ausgestaltungen des erfindungsgemäßen Verfahrens kann der Verfahrensschritt b) vor dem Verfahrensschritt a) und/oder der Verfahrensschritt d) vor dem Verfahrensschritt c) durchgeführt werden. Auch andere Zeitabläufe sind denkbar.

In einer weiteren vorteilhaften Ausgestaltung des erfindungsgemäßen Verfahrens ist das Inertgas ein Edelgas, insbesondere Argon. Die Verwendung von Argon hat sich bei der Durchführung des Sputterätzens als besonders vorteilhaft erwiesen, da hierbei relativ hohe energetische Energien durch die Ar-Atome auf die zu beseitigenden Ablagerungen und/oder Oxide auf den zu fügenden Verbindungsflächen übertragen werden können.

In einer weiteren vorteilhaften Ausgestaltung des erfindungsgemäßen Verfahrens erfolgt das Zünden des Inertgases gemäß dem Verfahrensschritt c) bei einer Frequenz in einem Bereich zwischen 0,05 - 2,5 MHz. Auch die beim induktiven Nieder- oder Hochfrequenzpressschweißen verwendeten Frequenzen werden aus einem Bereich zwischen 0,05 - 2,5 MHz gewählt.

In einer weiteren vorteilhaften Ausgestaltung des erfindungsgemäßen Verfahrens wird vor und/oder während des Sputterätzens der Verbindungsflächen ein Unterdruck zumindest in dem Bereich zwischen den zu fügenden Verbindungsflächen der Bauelemente erzeugt. Dadurch ist gewährleistet, dass die durch das Sputterätzen erzeugten Abtragungsprodukte aus dem Bereich der Verbindungsflächen der Bauelemente entfernt werden. Eine entsprechende Ablagerung dieser Produkte auf den Verbindungsflächen wird zuverlässig verhindert. In einer weiteren vorteilhaften Ausgestaltung des erfindungsgemäßen Verfahrens ist das erste Bauelement eine Schaufel oder ein Teil einer Schaufel eines Rotors in einer Gasturbine und das zweite Bauelement ein Ring oder einer Scheibe des Rotors oder ein am Umfang des Rings oder der Scheibe angeordneter Schaufelfuß. Es ist aber auch möglich, dass die Bauelemente Teile einer Schaufel eines Rotors in einer Gasturbine sind.

Eine erfindungsgemäße Vorrichtung zur Durchführung eines induktiven Nieder- oder Hochfrequenzpressschweißverfahrens zum Verbinden von metallischen Bauelementen, insbesondere von Bauelementen einer Gasturbine umfasst mindestens einen Induktionsgenerator und mindestens einen Induktor, wobei die Vorrichtung zudem Mittel zum Verbinden und Trennen der zu fügenden Bauelemente als Elektroden mit dem Induktionsgenerator aufweist. Des Weiteren weist die Vorrichtung einen Gasraum zur Aufnahme der zu fügenden Bauelemente und mindestens eines Inertgases sowie mindestens eine Gleichspannungsquelle zur Erzeugung eines Gleichspannungsfeldes mit alternierenden Polaritäten zumindest in dem Bereich zwischen den zu fügenden Verbindungsflächen der Bauelemente auf: Durch die erfindungsgemäße Integration von Elementen zur Durchführen eines Sputterätzens in die Vorrichtung zur Durchführung des induktiven Nieder- oder Hochfrequenzpressschweißverfahrens können rückstandsfreie und insbesondere oxidfreie metallische Oberflächen erzeugt werden, die unmittelbar im Anschluss an das Sputterätzen miteinander verschweißt werden können. Die erfindungsgemäße Vorrichtung gewährleistet eine sichere, dauerhafte und qualitativ sehr hochwertige Verbindung der zu fügenden Bauelemente. Durch die Verbindung der zu fügenden Bauelemente als Elektroden mit dem Induktionsgenerator ist es möglich, das durch den Induktionsgenerator erzeugte Nieder- oder Hochfrequenzfeld zum Zünden des Inertgases zu verwenden. Das angelegte Gleichspannungsfeld mit alternierenden Polaritäten bewirkt eine Bombardierung der Verbindungsflächen der Bauelemente mit den Atomen des Inertgases und eine entsprechende Abtragung unerwünschter Ablagerungen und Oxide auf den Verbindungsflächen (Sputterätzen). Die erfindungsgemäße Vorrichtung ist konstruktiv relativ einfach aufgebaut und daher kostengünstig herzustellen. Zudem ist es mit der erfindungsgemäßen Vorrichtung möglich, den Fügeprozess und den vorangehenden Reinigungsprozess der Fügeflächen sehr schnell durchzuführen, so dass auch höhere Stückzahlen verarbeitbar sind.

In einer vorteilhaften Ausgestaltung der erfindungsgemäßen Vorrichtung weist diese Mittel zum Verbinden des Induktionsgenerators mit dem Induktor auf. Dabei kann das Mittel zum Verbinden des Induktionsgenerators mit dem Induktor mit dem Mittel zum Verbinden und Trennen der zu fügenden Bauelemente als Elektroden mit dem Induktionsgenerator integriert ausgebildet sein. Des Weiteren weist die erfindungsgemäße Vorrichtung üblicherweise Mittel zur Einleitung des Inertgases in den Gasraum auf. Zudem kann die Vorrichtung Mittel zum Erzeugen eines Unterdrucks im Gasraum aufweisen.

Gemäß weiteren vorteilhaften Ausgestaltungen der erfindungsgemäßen Vorrichtungen ist das Inertgas ein Edelgas, insbesondere Argon. Dabei kann ein Zünden des Inertgases mittels des zumindest im Gasraum angelegten Nieder- oder Hochfrequenzfelds bei einer Frequenz in einem Bereich zwischen 0,05 - 2,5 MHz erfolgen. Auch die beim induktiven Nieder- oder Hochfrequenzpressschweißen verwendeten Frequenzen werden aus einem Bereich zwischen 0,05 - 2,5 MHz gewählt.

Ein Bauteil einer Gasturbine besteht aus mindestens einem ersten und einem zweiten Bauteil und kann nach einem im Vorhergehenden beschriebenen erfindungsgemäßen Verfahren hergestellt sein. Dabei kann das erste Bauelement eine Schaufel oder ein Teil einer Schaufel eines Rotors in einer Gasturbine und das zweite Bauelement ein Ring oder eine Scheibe des Rotors oder ein am Umfang des Rings oder der Scheibe angeordneter Schaufelfuß sein. Es ist aber auch möglich, dass die Bauelemente Teile einer Schaufel eines Rotors in einer Gasturbine sind.

Weitere Vorteile, Merkmal und Einzelheiten der Erfindung ergeben sich aus der nachfolgenden Beschreibung eines zeichnerisch dargestellten Ausführungsbeispiels.

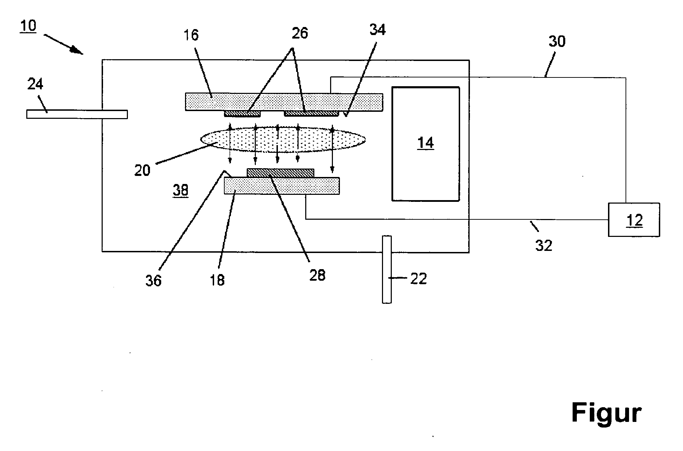

Dabei zeigt die Figur eine schematische Darstellung einer Vorrichtung 10 zur Durchftihrung eines induktiven Nieder- oder Hochfrequenzpressschweißverfahrens zum Verbinden von metallischen Bauelementen 16,18. Die Vorrichtung umfasst einen Induktionsgenerator 12 Erzeugung eines Nieder- oder Hochfrequenzfeldes und einen Induktor (nicht dargestellt) zur anschließenden Durchführung des Fügeverfahrens. In der Figur ist der Induktionsgenerator 12 mit den zu fügenden Bauelementen 16, 18 als Elektroden verbunden. Über die Bauelemente 16, 18 wird das genannte Nieder- oder Hochfrequenzfeld erzeugt, wobei dieses Feld zum Zünden eines sich im Gasraum 38 befindenden Inertgases, insbesondere Argon und zur Ausbildung eines entsprechenden Plasmas 20 verwendet wird. Die Vorrichtung 10 umfasst weiterhin eine Gleichspannungsquelle 14 zur Erzeugung eines Gleichspannungsfeldes mit alternierenden Polaritäten zumindest in dem Bereich zwischen den Bauelementen 16, 18 und insbesondere zwischen den zu fügenden Verbindungsflächen 34, 36 der Bauelemente 16, 18. Mithilfe des Gleichspannungsfeldes mit alternierenden Polaritäten erfolgt eine Bombardierung der Verbindungsflächen 34, 36 durch die Inertgasatome, wobei Ablagerungen und Oxide 26, 28, die sich auf den zu fügenden Verbindungsflächen 34, 36 befinden, physikalisch von den Verbindungsflächen 34, 36 abgelöst werden. Dieser als Sputterätzen bezeichnete Vorgang erfolgt rein physikalisch, wobei die Ablagerungen und Oxide 26, 28 durch einen durch das Plasma 20 bzw. die Inertgasatome übertragenen mechanischen Impuls abgelöst werden. Die Abtragungsprodukte werden über Mittel 24 zum Erzeugen eines Unterdrucks im Gasraum 38 aus diesem abtransportiert. Das Inertgas wird über Mittel 22 in den Gasraum 38 eingeleitet.

Des Weiteren erkennt man, dass der Induktionsgenerator 12 über elektrisch leitende Verbindungen 30, 32 mit jeweils einem Bauelement 16,18 verbunden ist. Die Mittel zum Verbinden und Trennen der zu fügenden Bauelemente 16, 18 als Elektroden mit dem Induktionsgenerator 12 sind nicht dargestellt. Gleiches gilt für die Mittel zum Verbinden des Induktionsgenerators 12 mit dem Induktor.

## Patentansprüche

1. Verfahren zum Verbinden von metallischen Bauelementen (16, 18), insbesondere von Bauelementen einer Gasturbine, wobei das Verbinden entsprechender Verbindungsflächen (34, 36) der Bauelemente (16, 18) mittels eines induktiven Nieder- oder Hochfrequenzpressschweißens erfolgt, **dadurch gekennzeichnet, dass** vor der Erwärmung und dem Fügen der Bauelemente (16, 18) mittels des induktiven Nieder- oder Hochfrequenzpressschweißens ein Sputterätzen der Verbindungsflächen (34, 36) durchgeführt wird.

2. Verfahren nach Anspruch 1, **dadurch gekennzeichnet, dass** zur Durchführung des Sputterätzens das Verfahren folgende Schritte umfasst:
a) Verbinden der zu fügenden Bauelemente (16, 18) als Elektroden mit einem Induktionsgenerator (12) und Beaufschlagung der Bauelemente (16, 18) mit Spannung;
b) Einleiten mindestens eines Inertgases zumindest in den Bereich zwischen den zu fügenden Verbindungsflächen (34, 36) der Bauelemente (16, 18);
c) Zünden des Inertgases zur Ausbildung eines Plasmas (20) mittels des angelegten Nieder- oder Hochfrequenzfeldes; und
d) Anlegen eines Gleichspannungsfeldes mit alternierenden Polaritäten zumindest in dem Bereich zwischen den zu fügenden Verbindungsflächen (34, 36) der Bauelemente (16, 18).

3. Verfahren nach Anspruch 2, **dadurch gekennzeichnet, dass** nach der Durchführung des Sputterätzens gemäß den Verfahrensschritten b) bis d) eine Trennung der Bauelemente (16, 18) von dem Induktionsgenerator (12) und eine Verbindung des Induktionsgenerators (12) mit mindestens einer Induktionsspule erfolgt.

4. Verfahren nach Anspruch 2 oder 3, **dadurch gekennzeichnet, dass** das Inertgas ein Edelgas, insbesondere Argon ist.

5. Verfahren nach einem der Ansprüche 2 bis 4, **dadurch gekennzeichnet, dass** das Zünden des Inertgases bei einer Frequenz in einem Bereich zwischen 0,05 - 2,5 MHz erfolgt.

6. Verfahren nach einem der vorhergehenden Ansprüche, **dadurch gekennzeichnet, dass** die beim induktiven Nieder- oder Hochfrequenzpressschweißen verwendeten Frequenzen aus einem Bereich zwischen 0,05 - 2,5 MHz gewählt werden.

7. Verfahren nach einem der vorhergehenden Ansprüche, **dadurch gekennzeichnet, dass** vor und/oder während des Sputterätzens der Verbindungsflächen (34, 36) ein Unterdruck zumindest in dem Bereich zwischen den zu fügenden Verbindungsflächen (34, 36) der Bauelemente (16, 18) erzeugt wird.

8. Verfahren nach einem der vorhergehenden Ansprüche, **dadurch gekennzeichnet, dass** das erste Bauelement (16) eine Schaufel oder ein Teil einer Schaufel eines Rotors in einer Gasturbine ist und das zweite Bauelement (18) ein Ring oder eine Scheibe des Rotors oder ein am Umfang des Rings oder der Scheibe angeordneter Schaufelfuß ist.

9. Verfahren nach einem der Ansprüche 1 bis 7, **dadurch gekennzeichnet, dass** die Bauelemente (16, 18) Teile einer Schaufel eines Rotors in einer Gasturbine sind.

10. Vorrichtung zur Durchführung eines induktiven Nieder- oder Hochfrequenzpressschweißverfahrens zum Verbinden von metallischen Bauelementen (16, 18), insbesondere von Bauelementen einer Gasturbine, mit mindestens einem Induktionsgenerator (12) und mindestens einem Induktor, **dadurch gekennzeichnet, dass** die Vorrichtung (10) Mittel zum Verbinden und Trennen der zu fügenden Bauelemente (16, 18) als Elektroden mit einem Induktionsgenerator (12), mindestens einen Gasraum (38) zur Aufnahme der zu fügenden Bauelemente (16, 18) und mindestens eines Inertgases sowie mindestens eine Gleichspannungsquelle (14) zur Erzeugung eines Gleichspannungsfeldes mit alternierenden Polaritäten zumindest in dem Bereich zwischen den zu fügenden Verbindungsflächen (34, 36) der Bauelemente (16, 18), aufweist.

11. Vorrichtung nach Anspruch 10, **dadurch gekennzeichnet, dass** die Vorrichtung (10) Mittel zum Verbinden des Induktionsgenerators (12) mit dem Induktor aufweist.

12. Vorrichtung nach Anspruch 10 oder 11, **dadurch gekennzeichnet, dass** die Vorrichtung (10) Mittel (22) zur Einleitung des Inertgases in den Gasraum (38) aufweist.

13. Vorrichtung nach einem der Ansprüche 10 bis 12, **dadurch gekennzeichnet, dass** die Vorrichtung (10) Mittel (24) zum Erzeugen eine Unterdrucks im Gasraum (38) aufweist

14. Vorrichtung nach einem der Ansprüche 10 bis 13, **dadurch gekennzeichnet, dass** das Inertgas ein Edelgas, insbesondere Argon ist.

15. Vorrichtung nach einem der Ansprüche 10 bis 14, **dadurch gekennzeichnet, dass** ein Zünden des Inertgases mittels eines zumindest im Gasraum (38) angelegten Nieder- oder Hochfrequenzfeldes bei einer Frequenz in einem Bereich zwischen 0,05 - 2,5 MHz erfolgt.

16. Vorrichtung nach einem der Ansprüche 10 bis 15, **dadurch gekennzeichnet, dass** die beim induktiven Nieder- oder Hochfrequenzpressschweißen verwendeten Frequenzen aus einem Bereich zwischen 0,05 - 2,5 MHz gewählt werden.

## Claims

1. Process for bonding metallic components (16, 18), in particular components of a gas turbine, the bonding of corresponding bonding surfaces (34, 36) of the components (16, 18) being effected by means of inductive low-frequency or high-frequency pressure welding, **characterised in that** prior to the heating and joining of the components (16, 18) by means of the inductive low-frequency or high-frequency pressure welding a sputter etching of the bonding surfaces (34, 36) is carried out.

2. Process according to Claim 1, **characterised in that** for the purpose of implementing the sputter etching the process comprises the following steps:
a) connecting the components (16, 18) to be joined as electrodes to an induction generator (12) and applying voltage to the components (16, 18);
b) introducing at least one inert gas at least into the region between the bonding surfaces (34, 36) to be joined of the components (16, 18);
c) igniting the inert gas for the purpose of forming a plasma (20) by means of the applied low-frequency or high-frequency field, and
d) applying a DC voltage field with alternating polarities at least in the region between the bonding surfaces (34, 36) to be joined of the components (16, 18).

3. Process according to Claim 2, **characterised in that** after the implementation of the sputter etching according to process steps b) to d) a separation of the components (16, 18) from the induction generator (12) and a connection of the induction generator (12) to at least one induction coil are effected.

4. Process according to Claim 2 or 3, **characterised in that** the inert gas is a noble gas, in particular argon.

5. Process according to one of Claims 2 to 4, **characterised in that** the ignition of the inert gas is effected at a frequency within a range between 0.05 MHz and 2.5 MHz.

6. Process according to one of the preceding claims, **characterised in that** the frequencies used in the course of the inductive low-frequency or high-frequency pressure welding are chosen from a range between 0.05 MHz and 2.5 MHz.

7. Process according to one of the preceding claims, **characterised in that** before and/or during the sputter etching of the bonding surfaces (34, 36) an underpressure is generated at least in the region between the bonding surfaces (34, 36) to be joined of the components (16, 18).

8. Process according to one of the preceding claims, **characterised in that** the first component (16) is a blade or a part of a blade of a rotor in a gas turbine and the second component (18) is a ring or a disc of the rotor or a blade root arranged on the periphery of the ring or of the disc.

9. Process according to one of Claims 1 to 7, **characterised in that** the components (16, 18) are parts of a blade of a rotor in a gas turbine.

10. Apparatus for implementing an inductive low-frequency or high-frequency pressure-welding process for connecting metallic components (16, 18), in particular components of a gas turbine, to at least one induction generator (12) and to at least one inductor, **characterised in that** the apparatus (10) exhibits means for connecting and separating the components (16, 18) to be joined as electrodes to an induction generator (12), at least one gas space (38) for receiving the components (16, 18) to be joined and at least one inert gas, and also at least one DC voltage source (14) for generating a DC voltage field with alternating polarities at least in the region between the bonding surfaces (34, 36) to be joined of the components (16, 18).

11. Apparatus according to Claim 10, **characterised in that** the apparatus (10) exhibits means for connecting the induction generator (12) to the inductor.

12. Apparatus according to Claim 10 or 11, **characterised in that** the apparatus (10) exhibits means (22) for introducing the inert gas into the gas space (38).

13. Apparatus according to one of Claims 10 to 12, **characterised in that** the apparatus (10) exhibits means (24) for generating an underpressure in the gas space (38).

14. Apparatus according to one of Claims 10 to 13, **characterised in that** the inert gas is a noble gas, in particular argon.

15. Apparatus according to one of Claims 10 to 14, **characterised in that** an ignition of the inert gas is effected by means of a low-frequency or high-frequency field applied in the gas space (38) at a frequency within a range between 0.05 MHz and 2.5 MHz.

16. Apparatus according to one of Claims 10 to 15, **characterised in that** the frequencies used in the course of the inductive low-frequency or high-frequency pressure welding are chosen from a range between 0.05 MHz and 2.5 MHz.

## Revendications

1. Procédé de raccordement de composants métalliques (16, 18), en particulier composants d'une turbine à gaz, où le raccordement des surfaces de liaison (34, 36) correspondantes des composants (16, 18) est réalisé au moyen d'un soudage inductif par pression basse fréquence ou haute fréquence, **caractérisé en ce qu'**il est procédé à une gravure ionique des surfaces de liaison (34, 36) avant le chauffage et l'assemblage des composants (16, 18) au moyen du soudage inductif par pression basse fréquence ou haute fréquence.

2. Procédé selon la revendication 1, **caractérisé en ce que** ledit procédé comprend les étapes suivantes pour l'exécution de la gravure ionique :
a) raccordement des composants (16, 18) à assembler en tant qu'électrodes avec un générateur d'induction (12), et application d'une tension sur les composants (16, 18) ;
b) application d'au moins un gaz inerte au moins dans la zone entre les surfaces de liaison (34, 36) des composants (16, 18) à assembler ;
c) allumage du gaz inerte pour former un plasma (20) au moyen du champ de basse fréquence ou de haute fréquence appliqué ; et
d) application d'un champ de tension continue à polarités alternées au moins dans la zone entre les surfaces de liaison (34, 36) des composants (16, 18) à assembler.

3. Procédé selon la revendication 2, **caractérisé en ce qu'**après exécution de la gravure ionique suivant les étapes de procédé b) à d), ont lieu une séparation des composants (16, 18) du générateur d'induction (12) et un raccordement du générateur d'induction (12) à au moins une bobine d'induction.

4. Procédé selon la revendication 2 ou la revendication 3, **caractérisé en ce que** le gaz inerte est un gaz noble, en particulier de l'argon.

5. Procédé selon l'une des revendications 2 à 4, **caractérisé en ce que** l'allumage du gaz inerte a lieu à une fréquence comprise entre 0,05 et 2,5 MHz.

6. Procédé selon l'une des revendications précédentes, **caractérisé en ce que** les fréquences utilisées lors du soudage inductif par pression basse fréquence ou haute fréquence sont sélectionnées dans une plage entre 0,05 et 2,5 MHz.

7. Procédé selon l'une des revendications précédentes, **caractérisé en ce qu'**avant et/ou pendant la gravure ionique des surfaces de liaison (34, 36), une dépression est générée au moins dans la zone entre les surfaces de liaison (34, 36) des composants (16, 18) à assembler.

8. Procédé selon l'une des revendications précédentes, **caractérisé en ce que** le premier composant (16) est une aube ou une partie d'une aube d'un rotor dans une turbine à gaz, et le deuxième composant (18) une bague ou un disque du rotor, ou un pied d'aube disposé à la périphérie de la bague ou du disque.

9. Procédé selon l'une des revendications 1 à 7, **caractérisé en ce que** les composants (16, 18) sont des parties d'une aube d'un rotor dans une turbine à gaz.

10. Dispositif pour l'exécution d'un procédé de soudage inductif par pression basse fréquence ou haute fréquence pour le raccordement de composants métalliques (16, 18), en particulier de composants d'une turbine à gaz, avec au moins un générateur d'induction (12) et au moins un inducteur, **caractérisé en ce que** ledit dispositif (10) comporte un moyen de raccordement et de séparation des composants (16, 18) à assembler en tant qu'électrodes avec un générateur d'induction (12), au moins une chambre à gaz (38) pour recevoir les composants (16, 18) à assembler et au moins un gaz inerte ainsi qu'au moins une source de tension continue (14) pour la génération d'un champ de tension continue à polarités alternées au moins dans la zone entre les surfaces de liaison (34, 36) des composants (16, 18) à assembler.

11. Dispositif selon la revendication 10, **caractérisé en ce que** ledit dispositif (10) comporte un moyen de raccordement du générateur d'induction (12) à l'inducteur.

12. Dispositif selon la revendication 10 ou la revendication 11, **caractérisé en ce que** ledit dispositif (10) comporte un moyen (22) d'amenée du gaz inerte dans la chambre à gaz (38).

13. Dispositif selon l'une des revendications 10 à 12, **caractérisé en ce que** ledit dispositif (10) comporte un moyen (24) de génération d'une dépression dans la chambre à gaz (38).

14. Dispositif selon l'une des revendications 10 à 13, **caractérisé en ce que** le gaz inerte est un gaz noble, en particulier de l'argon.

15. Dispositif selon l'une des revendications 10 à 14, **caractérisé en ce qu'**un allumage du gaz inerte au moyen d'un champ de basse fréquence ou de haute fréquence appliqué au moins dans la chambre à gaz (38) est exécuté à une fréquence comprise entre 0,05 et 2,5 MHz.

16. Dispositif selon l'une des revendications 10 à 15, **caractérisé en ce que** les fréquences utilisées lors du soudage inductif par pression basse fréquence ou haute fréquence sont sélectionnées dans une plage entre 0,05 et 2,5 MHz.
